Europäisches Patentamt

European Patent Office

Office européen des brevets

(11) Numéro de publication: **0 416 963 A1**

## DEMANDE DE BREVET EUROPEEN

(21) Numéro de dépôt: 90402180.5

(51) Int. Cl.5: **F16B 5/02**

(22) Date de dépôt: 27.07.90

(30) Priorité: 06.09.89 FR 8911659

(43) Date de publication de la demande:
13.03.91 Bulletin 91/11

(84) Etats contractants désignés:
DE GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Goly,Fabrice**
**198 Avenue Jean Jaurès**
**F-93700 Drancy(FR)**

(74) Mandataire: **Jacobson, Claude et al**
**Cabinet Lavoix 2, Place d'Estienne d'Orves**
**F-75441 Paris Cedex 09(FR)**

(54) **Dispositif d'assemblage.**

(57) Pour fixer une pièce (1) sur un support (2) pourvu d'une fenêtre (3), on utilise un système vis-écrou (11) dont l'écrou (13) est cruciforme avec des branches (14) inclinées qui s'appuient sur la face arrière (F) du support. L'écrou est retenu avec jeu par deux pontets (4, 7).

Application à la fixation d'équipements dans les véhicules automobiles.

FIG.3

La présente invention est relative à un dispositif d'assemblage pour fixer une pièce sur un support pourvu d'une fenêtre, du type comprenant d'une part un système vis-écrou dont l'écrou comprend des moyens de positionnement réglable au droit de la fenêtre, et d'autre part des moyens de retenue axiale et en rotation de l'écrou. Elle s'applique notamment aux fixations utilisées pour les ébénisteries, les planches de bord, etc. des véhicules automobiles.

Le FR-A-2.554.522 décrit un dispositif d'assemblage du type précité, qui assure une liberté de positionnement de l'écrou suivant deux directions perpendiculaires. Ce dispositif permet d'accepter de larges tolérances au montage, mais est relativement compliqué et coûteux.

L'invention a pour but de fournir un dispositif d'assemblage assurant de façon beaucoup plus simple et économique la liberté de positionnement de l'écrou.

A cet effet, l'invention a pour objet un dispositif d'assemblage du type précité, caractérisé en ce que l'écrou comporte au moins deux branches radiales dont chacune a une longueur au moins égale à la plus grande dimension de la fenêtre du support, ces branches étant destinées à prendre appui par leur extrémité libre sur la face du support opposée à la pièce à fixer, et en ce que lesdits moyens de retenue comprennent au moins deux pontets prévus sur ladite face d'appui du support, chaque pontet étant destiné à chevaucher avec jeu une branche de l'écrou.

Dans un mode de réalisation particulièrement avantageux, les branches de l'écrou présentent une élasticité dans la direction axiale de l'écrou. Le dispositif autorise alors de grandes tolérances dans la direction perpendiculaire au support et maintient un assemblage sous contrainte même s'il se produit des variations du degré de vissage de la vis dans l'écrou.

Des exemples de réalisation de l'invention vont maintenant être décrits en regard du dessin annexé, sur lequel :

- La figure 1 est une vue schématique en perspective d'un support muni de deux pontets ;
- la figure 2 est une vue schématique en perspective d'un écrou destiné à être utilisé avec le support de la figure 1 ;
- la figure 3 est une vue en coupe du dispositif d'assemblage suivant l'invention, en position montée ;
- la figure 4 est une vue en perspective d'une variante de l'écrou ; et
- la figure 5 est une vue en élévation de l'écrou de la figure 4.

Le dispositif d'assemblage suivant l'invention est destiné à être utilisé pour fixer une pièce 1, par exemple une plaque plane, sur une face, que l'on supposera être la face inférieure, d'un support 2 qui est également dans cet exemple une plaque plane.

Le support 2 est pourvu d'une fenêtre rectangulaire 3. Un pontet fixe 4, constitué d'un arceau qui définit une lumière rectangulaire 5 de même longueur qu'un côté 6 de la fenêtre 3, fait saillie sur la face supérieure F du support 2, le long de ce côté 6. Un pontet amovible 7 identique au pontet 4 peut être disposé de la même manière le long du côté 8 de la fenêtre 3 opposé au côté 6. Par exemple, comme représenté, chaque pontet possède à chaque extrémité un téton 9 s'engageant dans un trou 10 prévu dans la face supérieure du support, le pontet 4 étant fixé à demeure par tout moyen approprié.

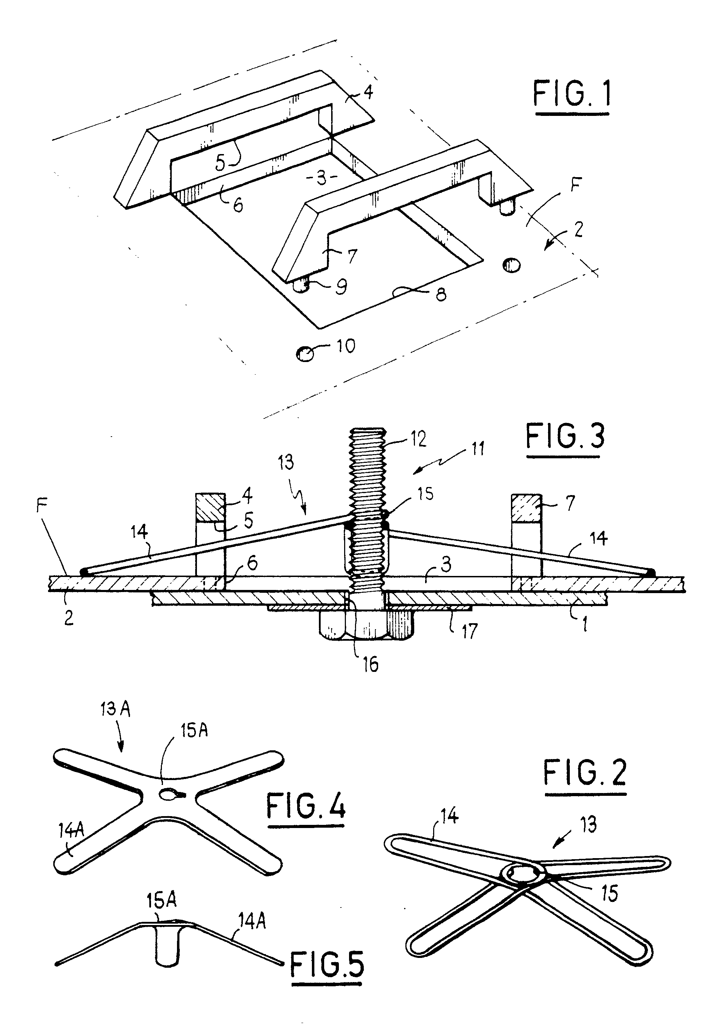

Le dispositif d'assemblage comprend également un système vis-écrou 11 constitué d'une vis ou d'un boulon classique 12 et d'un écrou 13. Ce dernier est obtenu par cintrage multiple d'un unique fil d'acier à haute limite élastique, de façon à définir quatre branches 14 à 90° les unes des autres et une zone centrale de vissage 15. Plus précisément, le fil part de la périphérie de la zone 15, définit par un aller-retour une première branche 14, puis, par un second aller-retour, la branche 14 opposée, puis décrit trois quarts de tour dans la zone 15, puis définit par un aller-retour une troisième branche 14, puis, par un dernier aller-retour, définit la quatrième branche de l'écrou. Le diamètre du fil et son mode de cintrage sont tels que le boulon 12 peut se visser directement dans la zone 15, comme on le voit sur la figure 3.

Les quatre branches 14 sont inclinées dans un même sens par rapport à l'horizontale, et chacune possède une longueur au moins égale à la plus grande dimension, c'est-à-dire à la diagonale, de la fenêtre 3 du support 2.

Pour le montage, l'écrou est disposé au-dessus du support 2 de façon que ses branches soient inclinées vers ce dernier. Une branche 14 est insérée dans la lumière 5 du pontet fixe 4, et le pontet mobile 7 est mis en place par-dessus la branche opposée. L'écrou est alors retenu axialement, latéralement et en rotation par les deux pontets, avec un large jeu dans toutes les directions mais sans possibilité de s'échapper. En particulier, la zone 15 de l'écrou peut être positionnée librement sur toute la surface de la fenêtre 3.

Le boulon 12 étant enfilé de bas en haut à travers un trou de fixation 16 de la pièce 1, avec interposition d'une rondelle 17, le boulon traverse la fenêtre 3 et vient se visser dans la zone 15 de l'écrou, celui-ci étant amené sans difficulté dans la position appropriée

Pendant le vissage, les branches 14, qui s'appuient librement par leur extrémité sur la face F autour de la fenêtre 3, fléchissent et créent une tension de serrage. Cette tension ne s'annule pas si, par exemple par suite des vibrations, le boulon 12 se dévisse quelque peu au cours du temps.

En variante, l'écrou 13 peut être remplacé par un écrou 13A en tôle emboutie représenté aux figures 4 et 5. Cet écrou 13A comporte quatre branches radiales 14A à 90° les unes des autres, inclinées dans le même sens par rapport à l'horizontale, et une zone centrale de vissage perforée 15A déformée en hélice pour permettre le vissage du boulon 12, comme connu dans la technique des écrous dits "écrous-tôle".

En variante également, la fenêtre 3 du support 2 peut avoir une forme quelconque, et les pontets peuvent être réalisés de différentes manières. Par exemple, le pontet fixe peut venir de matière avec le support, et le pontet mobile peut être constitué par un arceau rabattable, notamment par une, languette souple venue de moulage avec le support 2, articulée par une extrémité grâce à une région de moindre épaisseur, et dont l'extrémité libre peut s'engager dans une encoche ménagée dans le support de l'autre côté de la fenêtre 3.

**Revendications**

1. Dispositif d'assemblage pour fixer une pièce (1) sur un support (2) pourvu d'une fenêtre (3), du type comprenant d'une part un système vis-écrou (11) dont l'écrou (13 ; 13A) comprend des moyens de positionnement réglable au droit de la fenêtre, et d'autre part des moyens (4, 7) de retenue axiale et en rotation de l'écrou, caractérisé en ce que l'écrou (13 ; 13A) comporte au moins deux branches radiales (14 ; 14A) dont chacune a une longueur au moins égale à la plus grande dimension de la fenêtre (3) du support (2), ces branches étant destinées à prendre appui par leur extrémité libre sur la face (F) du support opposée à la pièce (1) à fixer, et en ce que lesdits moyens de retenue comprennent au moins deux pontets (4, 7) prévus sur ladite face d'appui (F) du support, chaque pontet étant destiné à chevaucher avec jeu une branche de l'écrou.

2. Dispositif d'assemblage suivant la revendication 1, caractérisé en ce que l'un au moins (7) des pontets (4, 7) est amovible.

3. Dispositif d'assemblage suivant l'une des revendications 1 et 2, caractérisé en ce que les branches (14 ; 14A) de l'écrou (13 ; 13A) présentent une élasticité dans la direction axiale de l'écrou.

4. Dispositif d'assemblage suivant la revendication 3, caractérisé en ce que les branches (14 ; 14A) de l'écrou (13 ; 13A) sont inclinées vers ladite face d'appui (F).

5. Dispositif d'assemblage suivant l'une quelconque des revendications 1 à 4, caractérisé en ce que l'écrou (13 ; 13A) comporte quatre branches (14 ; 14A) à 90° les unes des autres, et en ce que le dispositif comprend deux pontets (4, 7) chevauchant deux branches opposées l'une à l'autre.

6. Dispositif d'assemblage suivant l'une quelconque des revendications 1 à 5, caractérisé en ce que l'écrou (13) est réalisé d'une seule pièce en fil d'acier.

7. Dispositif d'assemblage suivant l'une quelconque des revendications 1 à 5, caractérisé en ce que l'écrou (13A) est réalisé d'une seule pièce en tôle emboutie.

FIG.1

FIG.3

FIG.4

FIG.2

FIG.5

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2847009 (DAIMLER-BENZ) <br> * page 7, ligne 14 - page 8, ligne 17; figure 1 * <br><br> --- | 1 | F16B5/02 |
| A | CH-A-355656 (TELEMECANIQUE) <br> * page 2, lignes 13 - 62; figures 1, 2 * <br><br> --- | 1 | |
| A | FR-A-2439321 (LATRILLE) <br> * page 1, lignes 17 - 27; figure 1 * <br><br> ----- | 2 | |
| | | | **DOMAINES TECHNIQUES RECHERCHES (Int. Cl.5 )** <br><br> F16B |

Le présent rapport a été établi pour toutes les revendications

| Lieu de la recherche | Date d'achèvement de la recherche | Examinateur |
|---|---|---|
| BERLIN | 16 NOVEMBRE 1990 | BLURTON M. D. |